# EUROPEAN PATENT SPECIFICATION

(11) **EP 1 275 275 B1**
(45) Date of publication and mention of the grant of the patent: **15.08.2007**
(21) Application number: 01930590.3
(22) Date of filing: 19.04.2001
(51) Int. Cl.: H05B 6/70

(54) **MICROWAVE OVEN**
MIKROWELLENOFEN
FOUR A MICRO-ONDES

(30) Priority: 19.04.2000 WO PCT/US00/10624
(43) Date of publication of application: 15.01.2003
(73) Proprietor: Enersyst Development Center, L.L.C., Dallas, Texas 75234 (US)
(72) Inventor: DOBIE, Michael, J., Double Oak, TX 75067 (US); NORRIS, John, Robert, Plano, TX 75075 (US); COOPER, Neal, S., North Richland Hills, TX 76180 (US); BACIGALUPE, Carlos, Carrollton, TX 75007 (US); FOREMAN, Robert, W., Euless, TX 76039 (US)
(74) Representative: UEXKÜLL & STOLBERG
(86) International application number: PCT/US2001/012741
(87) International publication number: WO 2001/082653

(56) References cited:
- WO-A-97/19576
- WO-A-98/03041
- US-A- 2 704 802

## Description

### FIELD OF THE INVENTION

The present invention relates to an oven according to the preamble of claim 1.

### BACKGROUND OF THE INVENTION

The oven disclosed herein relates primarily to ovens suitable for use in the commercial food service industry, such as fast food restaurants, and other food service application where there is great variety in the food products prepared, the need for speedy thermalization of food and space constraints. While various oven designs are known and available for commercial food service applications, there still exists a need for an efficient and effective oven that allows for simultaneous cooking of different food products requiring different heat treatments. Single cavity ovens have been designed heretofore that include microwave and convection heat transfer cooking means. While such ovens meet the needs of certain commercial food service applications by providing rapid thermalization and cooking, the inability to cook different foods simultaneously with different heating conditions and cook cycles does not provide needed flexibility. Furthermore, known combination ovens often require mechanical means to stir the microwave or move the food product in order to achieve even microwave heat transfer to the food product.

The present invention may be embodied in an oven that meets a need in the food service industry for an oven provides rapid heating/cooking and the ability to cook multiple food products simultaneously under different conditions and cook cycles. Moreover, the ovens of the present invention provide a microwave heating means that does not require mechanical stirring of microwaves or movement of food products to achieve substantially uniform distribution of microwave energy into the cooking cavities of the oven.

### SUMMARY OF THE INVENTION

An oven according to the preamble of claim 1 is known from US 2, 704, 802 and WO 98/03041 where microwave energy is transferred into a cooking cavity via a wave guide provided with slots that are preferably inclined with respect to the longitudinal axis of the wave guide. The problem to achieve an even heating of food is also tackled in WO 97/19576 by using a grill and combination oven including hot air circulation and steam. However, these known approaches are not sufficient enough to ensure an even microwave heat transfer to the food product.

The present invention solves the problem of an oven according to the preamble of claim 1 to achieve an even microwave heat transfer to the food product by the characterising features of claim 1.

In connection with the invention an oven may be provided that includes a cooking chamber, a blower and a shelf disposed within the cooking chamber. The shelf has a unique design in that it has an inlet opening and cavity in fluid communication with the blower and at least one opening in fluid communication with the cooking chamber through which temperature controlled air can flow into the cooking chamber to cook food by convection heating. In another aspect of the invention, the oven further comprises a microwave heating source for heating food products within said cooking chamber, thereby providing multiple heating methods (convection and microwave).

In connection with the invention, the microwave heating means may include a microwave source and wave guide through which microwaves travel. The wave guide includes a plurality of openings through which microwaves can pass into said cooking chamber. In a preferred aspect of the invention, the openings in the wave guide are positioned to correspond with the predetermined minima or maxima for the microwave wavelength propagating within the wave guide. That is the spacing of the wave guide openings occurs at multiples of predetermined minima and/or maxima for the microwaves within the guide generated by the microwave source, most commonly a magnetron.

In connection with the invention, a heating element can be mounted within the cooking chamber, providing an additional heating means. In a preferred embodiment, a movable, reflective stirrer is positioned above the heating element to reflect heat from the heating element toward a food product.

In connection with the invention the shelf may include a plurality of louvers protruding from the top surface of the shelf for supporting a food receptacle, thereby allowing air to flow freely beneath the food product or receptacle. The louvers have openings that direct temperature controlled air in a direction substantially parallel to the top of the shelf.

In connection with the invention, the cooking chamber may comprise a first cooking cavity and a second cooking cavity and includes a first shelf and a second shelf. The first shelf has an inlet opening and cavity in fluid communication with a blower and the second shelf has an inlet opening and cavity in fluid communication with a blower. Further, both the first and second shelves have at least one opening in fluid communication with the first cooking cavity and second shelf having at least one opening in fluid communication with said second cooking cavity, respectively. In a preferred aspect of this embodiment, microwave heating is provided in the first and second cavities through wave guides, preferably a pair of wave guides associated with each cavity. The preferred wave guide arrangement again provides a wave guide having a predetermined minima and maxima and openings in the wave guide positioned to substantially correspond the minima or maxima, thereby providing efficient and even distribution of microwave energy into the cooking cavities along the length of the wave guide.

In connection with the invention, the blower which supplies temperature controlled air to the cooking chamber has an exhaust opening in its housing through which a portion of the temperature controlled air is exhausted from the system. In this arrangement, the oven further includes an ambient air intake opening in fluid communication with the blower whereby the blower draws airs through the intake opening to replace the exhausted air.

According to the present invention, an oven is provided with a first microwave source for producing microwaves and a first wave guide through which microwaves energy travels and is transferred into the oven cavity through a plurality of slots in the wave guide.

In this arrangement the slots are arranged such that the number of slots increases along the length of the wave guide downstream of said microwave source.

In another preferred embodiment of this invention there is provided a second microwave source and a second wave guide with a plurality of slots along the centerline of the length of the wave guide, said slots being arranged such that the number of slots increases along the length of the wave guide downstream of said microwave source.

In yet another preferred embodiment of the invention, the slots are in addition disposed at an angle between 60-70 degrees of the centerline of the wave guide. In another preferred embodiment providing a second microwave source and a second wave guide with plurality of slots, the slots are in addition disposed at an angle between 60-70 degrees of the centerline of the wave guide.

### BRIEF DESCRIPTION OF THE DRAWINGS

Figures 1 to 15 do not show the characteristic features of the claimed invention.
FIG. 1 is front view of the oven (three cavity configuratron);
FIG. 2 is a front view of the interior cooking chamber of the oven (three cavity configuration);
FIG. 3 is a front perspective view of the interior cooking chamber and portions of the convection heat transfer and microwave heat transfer systems of the oven (three cavity configuration);
FIG. 4 is a front perspective view of the interior cooking chamber and portions of the convection heat transfer and microwave heat transfer systems of the oven (three cavity configuration);
FIG. 5 is a front perspective view of the interior cooking chamber and portions of the convection heat transfer system of the oven (three cavity configuration), including the food product shelf;
FIG. 6 is a view of the interior cooking chamber depicting the electric heating element within the cooking chamber;
FIG. 7 is a left side view of the oven with the left panel of the exterior cabinet removed to show portions of the convection heating system of the oven (three cavity configuration);
FIG. 8 is a perspective view of the food shelf which serves as a conduit through which temperature controlled air into the cooking chamber of the oven;
FIG. 9A is a perspective view of an alternative embodiment of the shelf;
FIG. 9B is a cross section view of the alternative embodiment of the shelf depicted in FIG. 9A;
FIG. 10 is a perspective view of a product support rack;
FIG. 11 is a perspective view of an embodiment of an air delivery duct for the convection heat transfer system of the oven;
FIG. 12 is a perspective-view of a preferred alternative-embodiment of an air delivery duct for the convection heat transfer system of the oven;
FIG. 13A is a front view of a filter assembly for filtering air exiting the cooking chamber;
FIG. 13B is side view of the filter assembly of FIG. 13A;
FIG. 13C is schematic depiction of the accordion fold filter plate of the filter assembly of FIG. 13A;
FIG. 14 is a side view of a bracket for supporting the filter assembly of FIG. 13A on the side wall of the interior cooking chamber of the oven;
FIG. 15 is schematic depiction of a control system for the oven of the present invention (three cavity configuration);

Figs. 16 to 25 relate to an embodiment of the present invention.

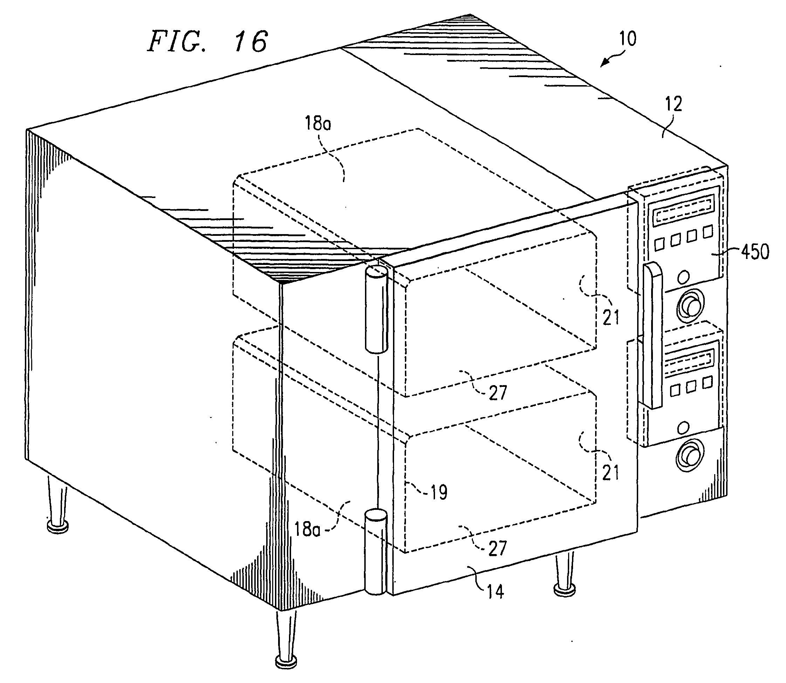

FIG. 16 is a perspective view of a two cavity configuration of the oven;

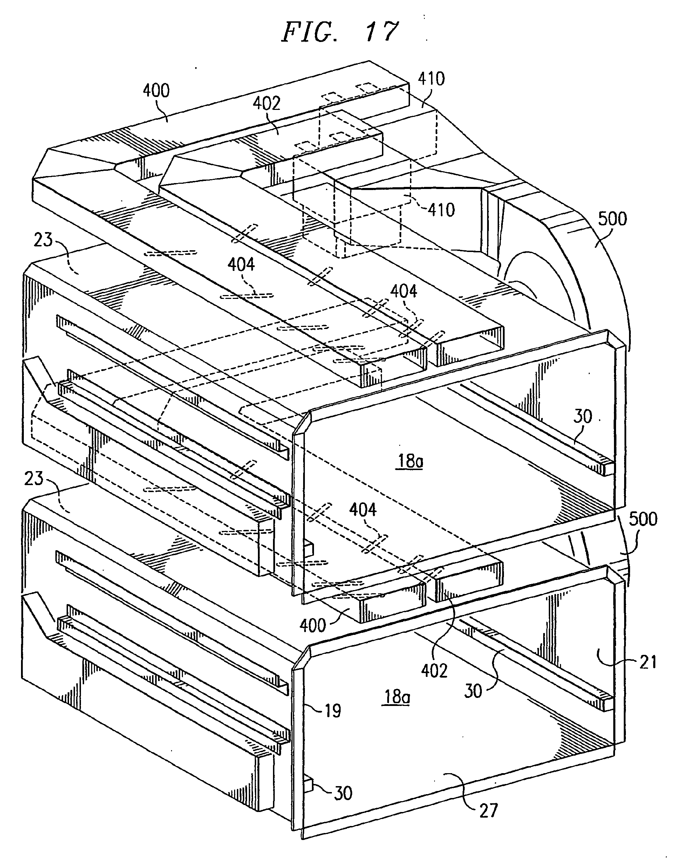

FIG. 17 is a partial perspective view of the interior cooking chamber and microwave heating system for the oven (two cavity configuration);

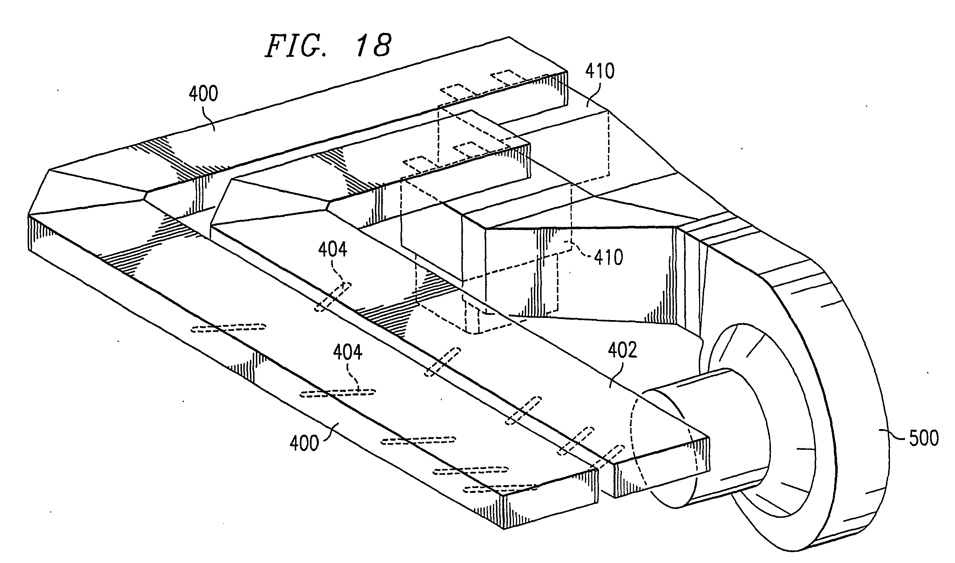

FIG. 18 is a perspective view of the microwave heating system for the oven (two cavity configuration);

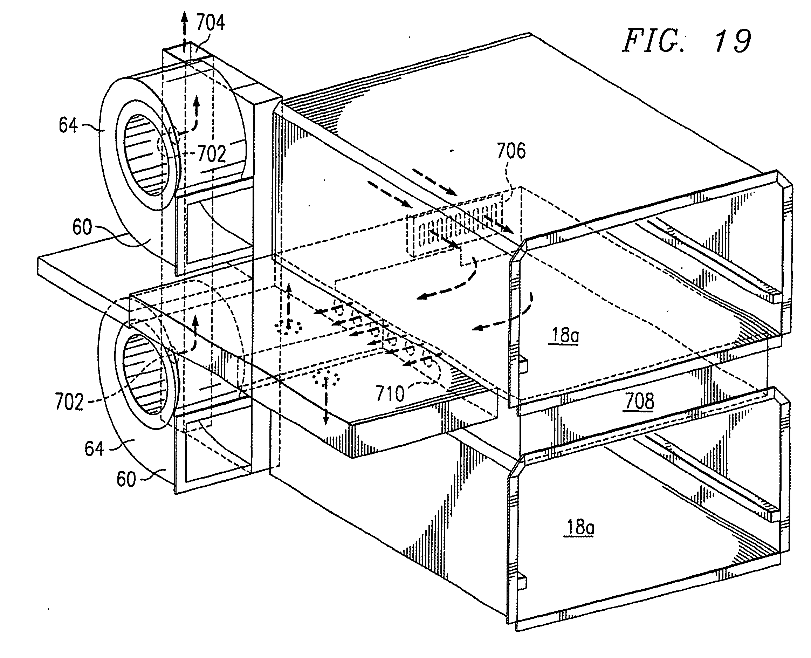

FIG. 19 is a partial perspective view of the cooking chamber and oven configuration with partial exhaust of temperature controlled air stream;

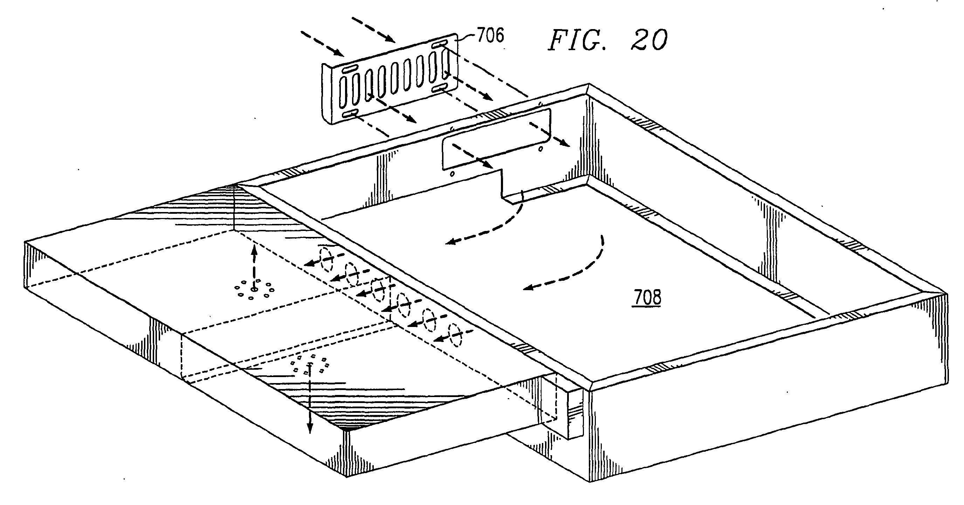

FIG. 20 is a partial perspective view of the ambient air intake and partition chamber aspects of a preferred embodiment of the two cavity configuration of the oven;

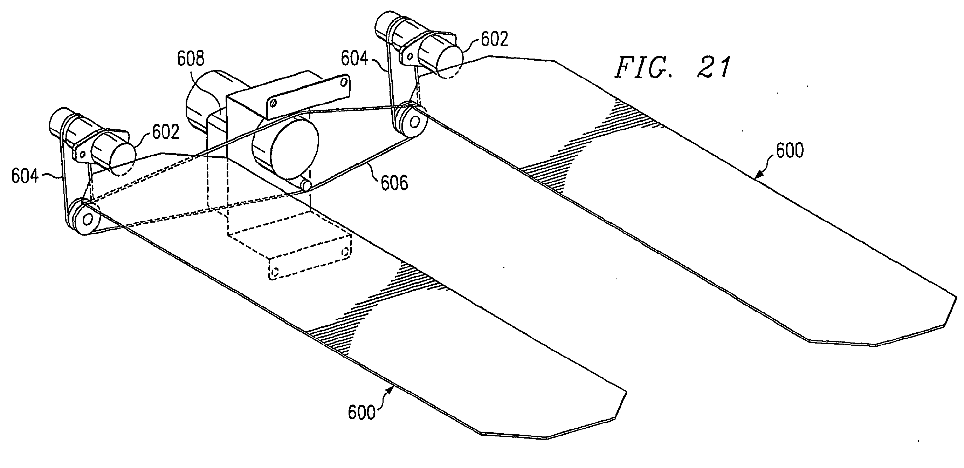

FIG. 21 is a perspective view of the reflective stirrer of the present invention;

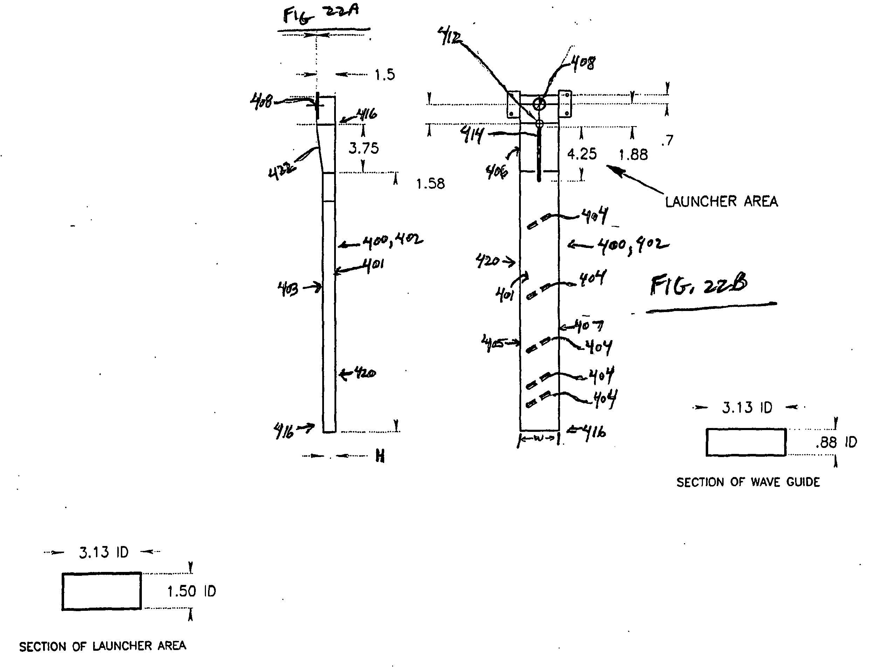

FIG. 22A is a side view of a preferred embodiment of the microwave guide of the present invention;
FIG. 22B is a front view of a preferred embodiment of the microwave guide of the present invention;

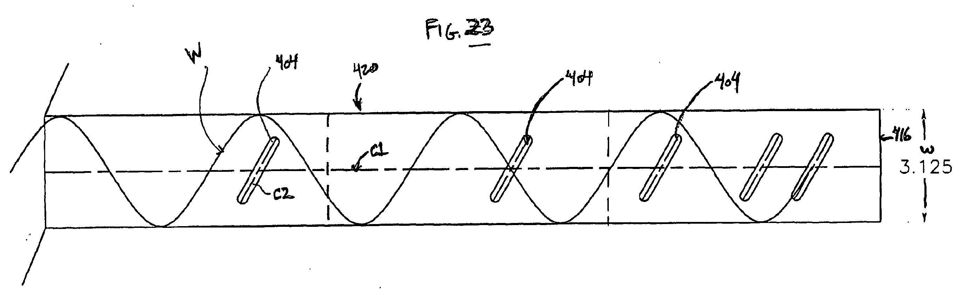

FIG. 23 is a front view of the slot arrangement for a preferred embodiment of the microwave guide of the present invention;

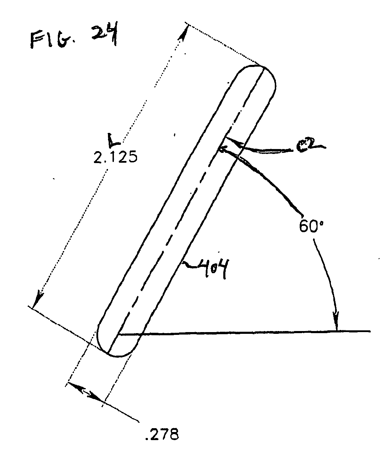

FIG. 24 depicts a preferred wave guide slot arrangement for the microwave guide of the present invention; and

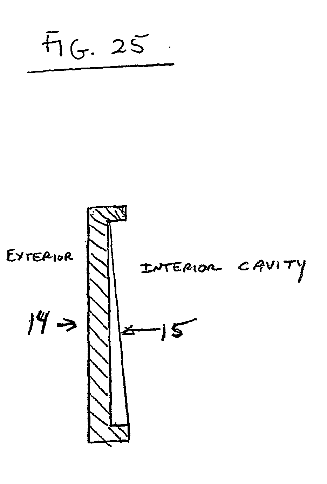

FIG. 25 is a cross section side view of a preferred oven door design of the present invention;

### DETAILED DESCRIPTION OF THE INVENTION

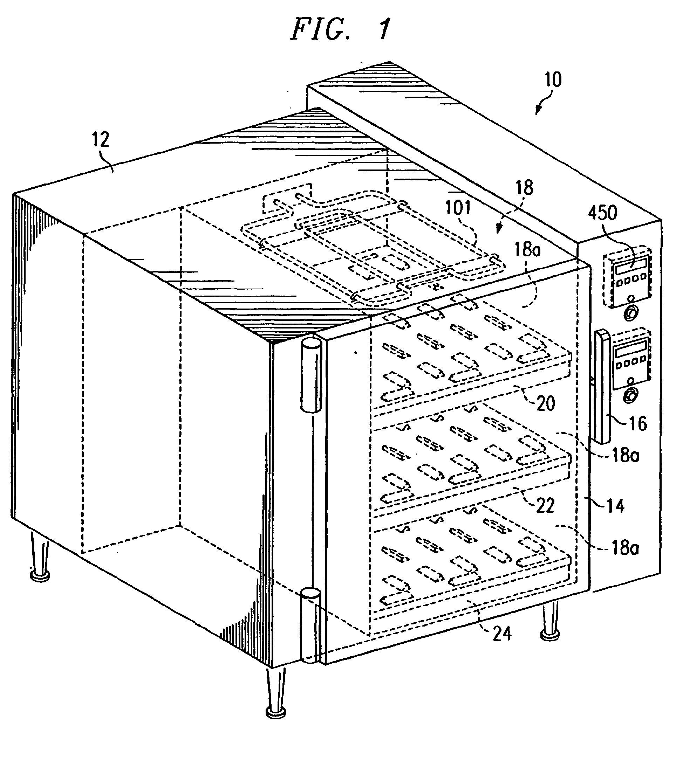

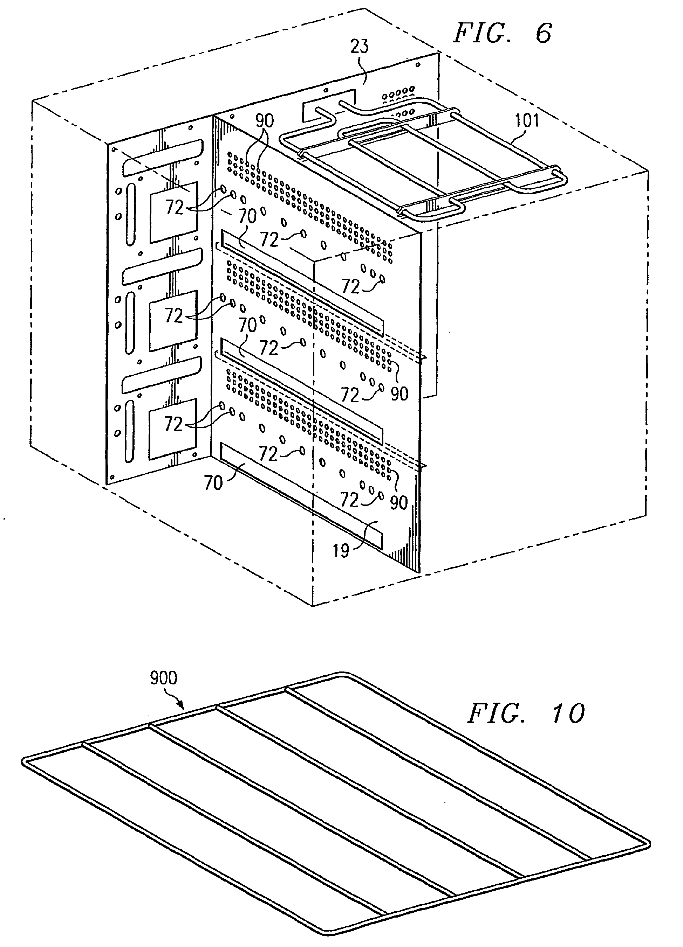

The description of the invention provided below is made with reference to the drawings attached hereto. The drawings have been consecutively numbered as FIGS. 1-23, wherein figures 1 to 15 do not show the characteristic features of the claimed invention.

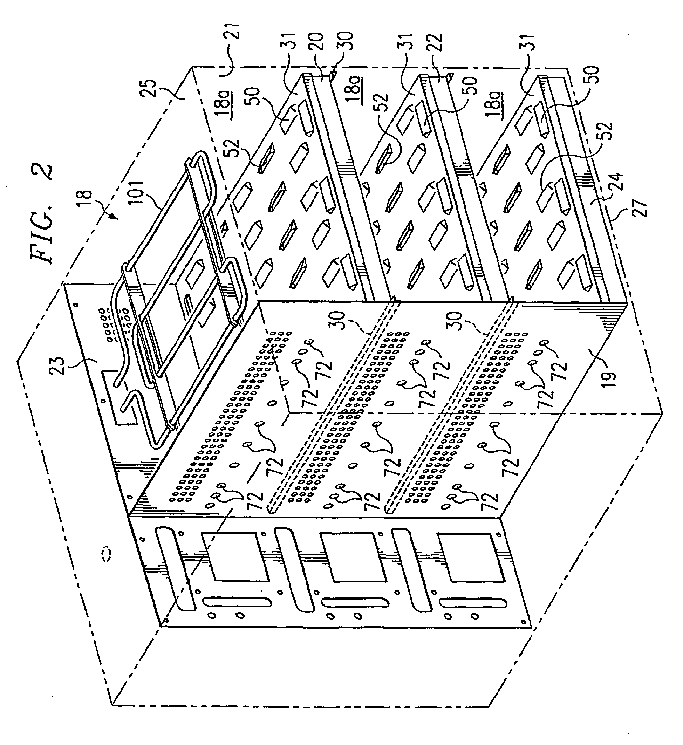

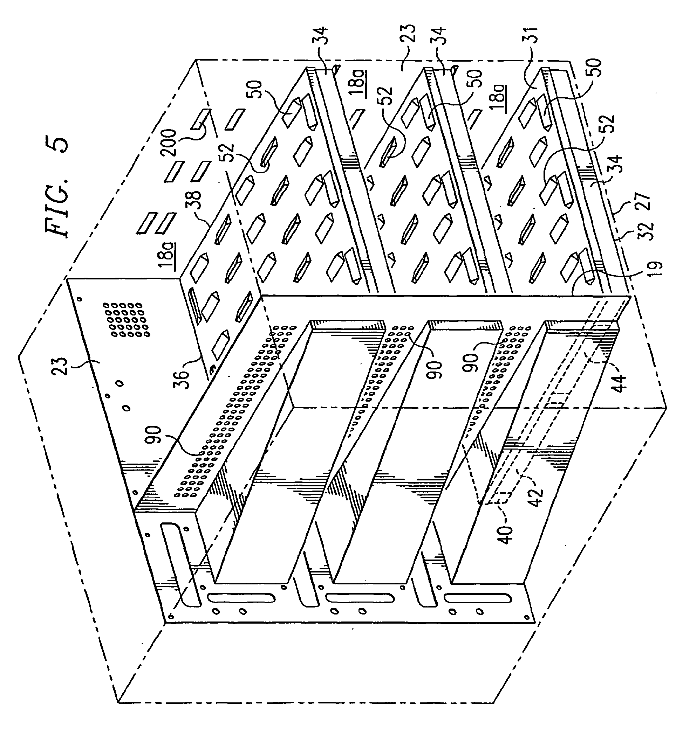

In FIG. 1, there is shown one embodiment of the oven 10 according to the preamble of claim 1. Oven 10 includes an exterior cabinet 12 defined by exterior side walls, exterior top and bottom walls and an exterior rear wall. Preferably said walls are constructed of a stainless steel material. Hingedly secured to the front of the oven is door 14 which permits food products to be placed in and out of the interior of the oven. A handle 16 with latching means is secured to door 14 to allow the door to be secured in a closed position during cooking. The door 14 is designed by known conventional means for preventing microwave leakage from the chamber 18 while the door is closed. Referring to FIGS. 2-4, 16-17 and 19, chamber 18 is defined by interior side walls 19 and 21, back wall 23, top wall and bottom wall 27 (collectively the oven chamber interior walls). Preferably, said oven chamber interior walls are constructed of a stainless steel material. As depicted in FIGS. 1 and 5 (three cavity oven) and FIGS. 16-17 and 19 (two cavity oven), chamber 18 further comprises a plurality of cooking cavities 18a.

Referring to the three-cavity oven of FIGS. 1-5, disposed within the chamber 18 of the oven are upper shelf 20, intermediate shelf 22 and lower shelf 24, preferably constructed of a stainless steel material. Shelves 20 and 22 are movably mounted within the oven chamber 18 and are positioned atop brackets to hold the shelves in position. Bottom shelf 24 can rest on the bottom of the oven chamber or, if desired, can rest on a bracket as well. Said brackets are generally shown by reference numeral 30 and are secured to the interior side walls of the oven cavity on opposite sides of the cavity walls. By providing removable shelves they can be more easily cleaned.

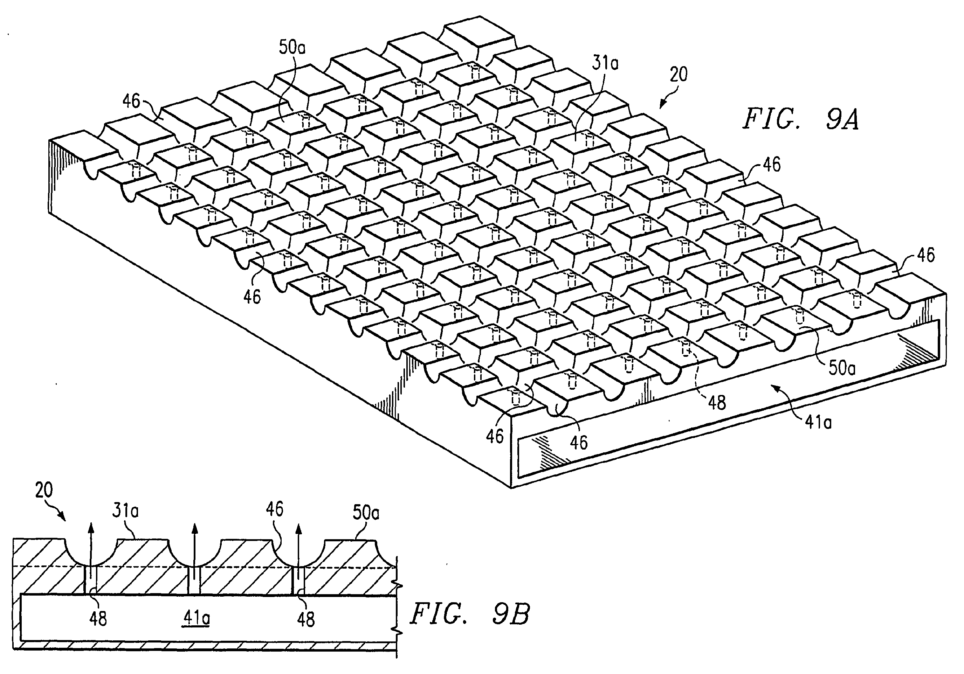

Referring to FIGS. 2, 5 and 8, the shelves 20, 22 and 24 shall be described in greater detail. Each shelf is designed to not only support a food product but is also designed as a conduit through which temperature-controlled (e.g. heated) gas (preferably air) passes and provides convection heating to food products within each oven cavity 18a. As shown in the above referenced figures, each shelf has a top portion 31, a bottom portion 32, side portions 34 and 36, rear portion 38 and front portion 40, defining shelf cavity 41. Front portion 40 is disposed within the chamber of the oven adjacent interior oven chamber side wall 19. Further, the front wall 40 of each shelf has openings 42 and 44 through which temperature controlled air can pass into the shelf cavity 41. After the temperature controlled air is disposed into the shelf cavity, the air then passes through openings 52 in louvers 50 which project from the top portion 31 of each shelf. The louvers 50 are positioned at spaced areas and permit air to exit via openings in the louvers in a direction substantially parallel to the top portion of the shelf, at least as it initially exits a louver 50. The openings on louvers 50 are best seen in FIGS. 5 and 8 and are represented by reference numeral 52. When temperature controlled gases exit openings 52 into the oven cavity, food products disposed within the oven cavity are heated via convective heat transfer. One advantage of the louvered openings projecting from the shelf is that when a pan or other food receptacle is placed on the shelf, heated air travels freely beneath the pan and between the louvers providing very effective convective heat transfer.

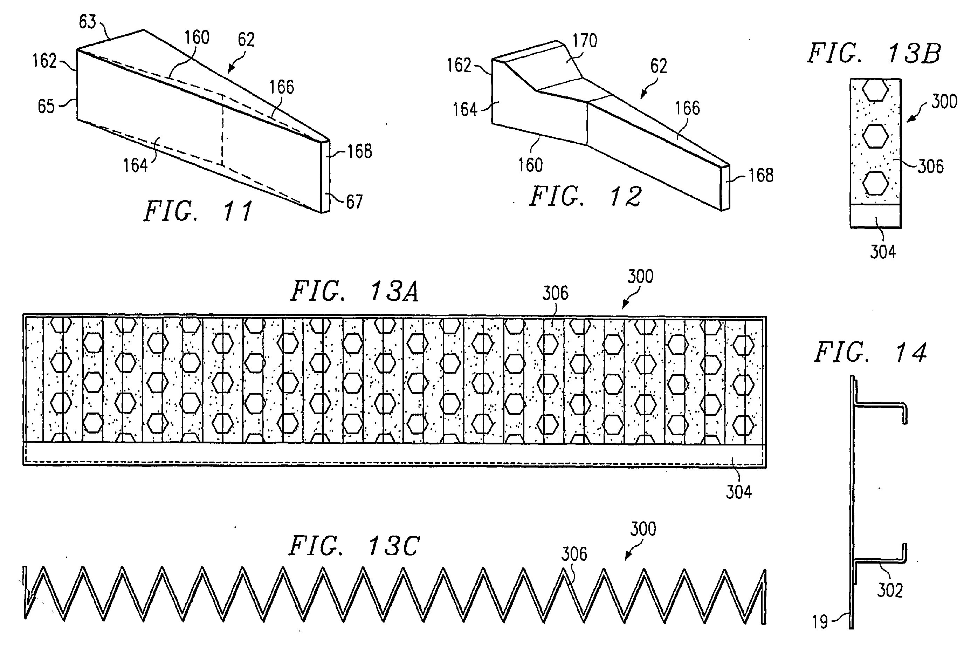

The louvers are inverted and do not project from the top of the shelf, but instead project into the shelf cavity. In this configuration the louvers act like scoops within the shelf cavity. While this configuration does not allow air to flow freely beneath a food tray disposed over the openings, a wire rack 900 (FIG. 10) may be placed on the shelf to lift the food receptacle (or food) from the top surface of the shelf, thereby providing satisfactory convection heat transfer.

In FIGS. 9A and 9B, the top surface of the shelf 31a has vertically extending protrusions 50a, recessed areas or surfaces 46 and openings 48 disposed in the recesses areas. The arrows shown in FIG. 9B generally depict the direction of air travel into the shelf cavity 41a and through openings 48. Like the louver configuration (noninverted) described above, one advantage of the shelf design depicted in FIGS. 9A and 9B is that when a pan or other food receptacle is placed on the shelf, heated air travels freely beneath the pan and between the louvers providing very effective convective heat transfer.

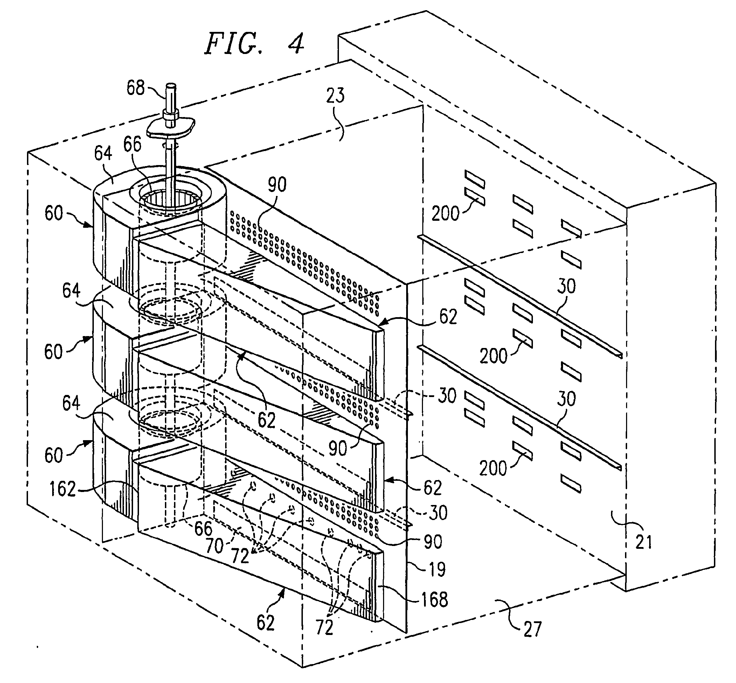

Temperature controlled air is delivered into each shelf by blower assemblies 60 (FIG. 4). As shown in FIG. 4, each blower assembly 60 comprises a blower housing 64, a blower wheel 66 and a shaft 68 operably connected to a motor which rotates each blower wheel. Each blower wheel is turned by a single axle 68 which is operably connected to a motor means. A 74,6 W [1/10 horsepower] motor has been found to be adequate. A blower wheel of the forward inclined type has also been found to be adequate. Air is drawn into the blower housing and is disposed into tapered ducts 62 which, as shown, are disposed between the cabinet side wall and the oven chamber side wall 19.

In FIG. 4, specific reference numerals are provided only with respect to the tapered duct which is in fluid communication with the lower shelf. However, the features of the lower blower and duct assemblies are essentially identical to the middle and upper blower and duct assemblies and therefore descriptions for the latter are not repeated. As shown in FIG. 4, each tapered duct has a proximal end 162 and a distal end 168. An inlet opening is provided at proximal end where temperature controlled gas from blower 60 enters the duct (i.e., inlet opening 164 is in fluid communication with the blower assembly associated with the duct). Further, each tapered duct 62 has an elongated opening 70 at the bottom inward facing wall and also has a plurality of orifices 72. The orifices 72 and elongated opening 70 are formed in the side wall 19 of the oven chamber 18 (FIG. 12) with the remainder of the duct 62 being formed by two tapered side walls and a top wall. Temperature controlled gases entering each duct 62 exit through openings 72 into the respective oven cavities to heat the food product contained within said cavities. Further, as shown, a portion of the air entering each duct 62 also exits through opening 70 and flows respectively into the shelf cavities 18a of shelves 20, 22 and 24. In other words, each tapered duct feeds a separate shelf (20, 22, 24) and also feeds temperature controlled air through orifices 72 above each shelf (20, 22, 24). Accordingly, as described above, convective heat transfer is achieved by the present oven design through orifices located in the oven cavity side wall above each shelf and also through the shelves themselves through the louvers disposed on the top portion of each shelf. In an alternative arrangement, the oven would not include orifices 72 and therefore all heated gas would flow from ducts 62 into the shelf associated with the duct.

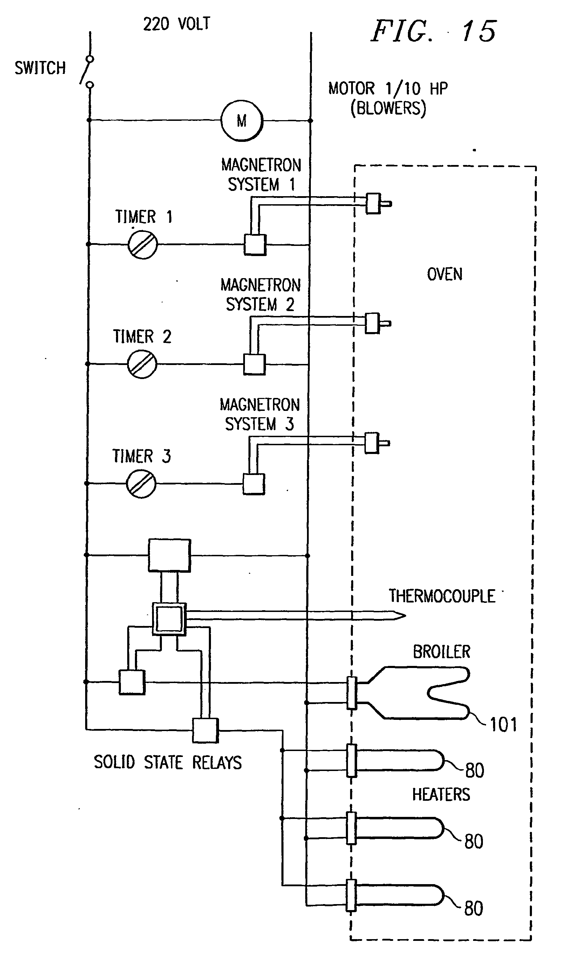

Referring to FIGS. 4-7, air return openings 90 are provided in side wall 19 within each cooking cavity 18a for the return of gas from each cooking cavity to blowers 60. By providing air return ports within each cavity 18a, each cavity can function as an independent convection oven, thereby allowing cooking of different foods at different temperatures and on different cycles. In FIGS. 13A-C and 14, the air return openings 90 may be covered by a filter assembly 300 mounted to side wall 19 by a bracket 302 or other known-means to prevent food particles, grease and other materials from escaping the cooking cavity through the return openings. A preferred filter assembly 300 is shown in FIGS. 13A-C and 14 and comprises a filter frame 304 which supports a perforated metal plate 306 that is folded in an accordion fashion thereby providing a greater surface area over which return air passes before exiting the cooking chamber through the return openings.

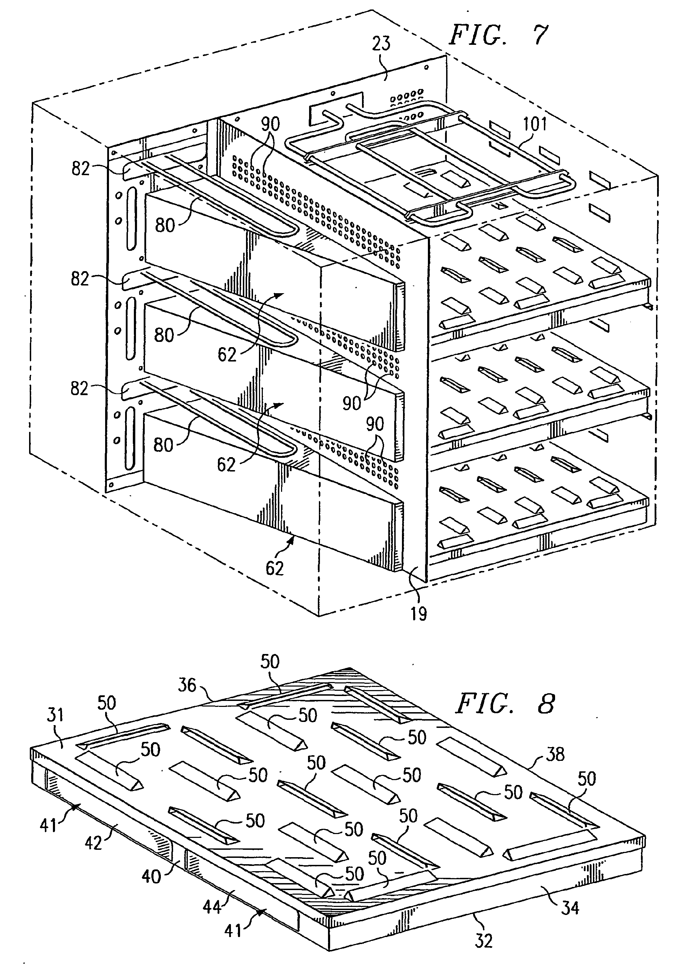

The temperature of the circulated air or gas can be controlled by any known means. One suitable means to heat and control the temperature of the air is by well known electric heating rods 80 (i.e., Calrod) (FIG. 7) or "gas burner" (not shown). Heating rods 80 can be disposed in any suitable location. Heat rods are placed as shown in FIG. 7 in the return air path for the oven. FIG. 7 shows just one heating rod placed between the upper and middle ducts 62 in the area between the exterior cabinet side wall and the cavity side wall 19. A heating element is placed above each duct 62 through the openings 82 shown in FIG. 7.

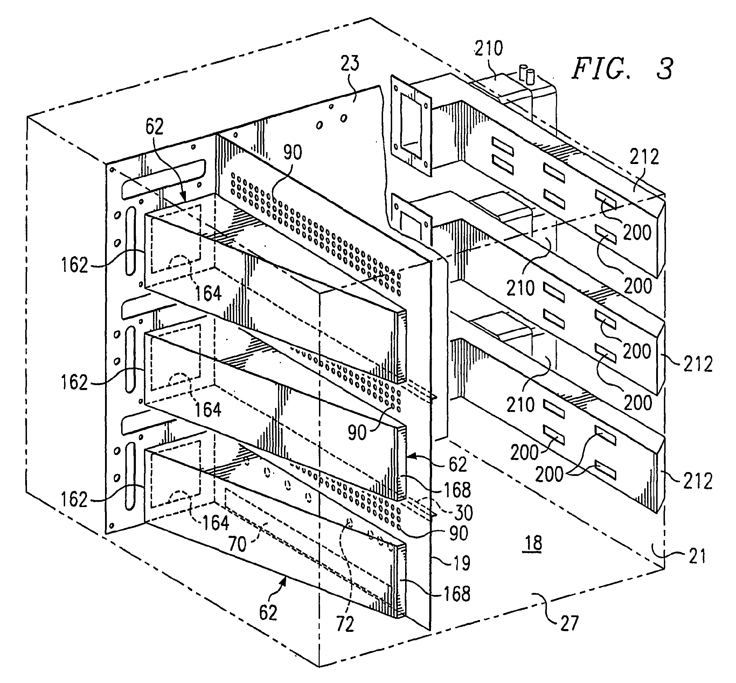

As it relates to the tapered duct design, duct 62 may have a constant taper from proximal end 162 to distal end 168 as shown in FIGS. 3-5 and 7 or may have multiple degrees of taper as shown by the dashed lines in FIG. 11. As shown in FIG. 11 and denoted by the cross hatched lines, duct 62 may have a dual taper configuration, which has been found to provide even air flow from the orifices along the length of the duct. More particularly, in the dual taper configuration of duct 62, said duct has a first horizontal tapered portion 160 adjacent proximal end 162 and inlet opening 164 (i.e., the opening where air from the blower enters the duct) and a second horizontal tapered portion 166 adjacent the distal end 168. As shown, the first horizontal tapered portion 160 has a greater angle of taper than the second horizontal tapered portion 166 which has a lower slope. Preferably, the first horizontal tapered portion 160 extends approximately one-quarter to one-half of the length of the duct. The degree of taper in the first and second horizontal tapered portions may vary. Preferably, the first horizontal tapered portion tapers down 1 inch for every 2,54 cm to 7,62 cm [1 to 3 inches] of length and the second horizontal tapered portion tapers 2,54 cm [1 inch] for every 17,78 cm to 40,64 cm [7 to 16 inches] of length. By providing a dual taper, it has been found that the air is distributed more evenly along the length of the duct from proximal end 162 to distal end 168. As shown in FIG. 12, said duct not only includes the dual taper horizontally along its length described above, but also includes a vertically tapered portion 170 adjacent proximal end 162 to further enhance air flow into the duct and even distribution of heated air into the oven chamber along the length of the duct.

After the temperature controlled air enters the oven cavity 18a through the above-described orifices 72 (optionally) and shelves, air is returned to the blower housing through return openings 90 in the oven cavity side wall 19 (i.e, the cavity wall adjacent each duct 62) (see FIGS. 2-5). The air returning through openings 90 is heated by heating element 80 before entering the blower housing where the heated air is recirculated into the oven cavity through the ducts 62.

Optionally, an electric heating element 101 (e.g., Calrod heating elements) may also be disposed adjacent the top of the oven cavity so as to provide a means for broiling food products disposed on the upper shelf (see FIGS. 1, 2 and 6).

The present oven also provides means for heating food product via microwave energy. In FIGS. 2 and 3, microwaves are disposed into the oven cavity through microwave openings 200 formed in the side wall 21 of the oven cavity. Side wall 21 is disposed opposite of oven cavity side wall 19. As shown there are three series of openings 200, each being served by a separate magnetron assembly 210. The type (i.e. power) of magnetron used is a matter of choice and is based on well known selection factors. Use of 2450 MHz magnetrons were found suitable in the embodiment shown in FIGS. 16-18.

In FIGS. 2 and 3, each magnetron 210 feeds microwaves into and through a conduit 212 associated with the particular magnetron assembly and through the openings 200 and into the oven cavity. The openings 200 and conduit structure 212 are arranged such that a more uniform dispensing of microwave is provided within the oven cavity. A preferred configuration for the openings 200 is shown in the figures. Other configurations may also be determined and will vary according to the design and dimensions of the cooking cavity. As shown in the figures, each cavity 18a has its own independent microwave source (i.e., magnetron assemblies). Thus, heating of food products disposed in different cavities can be provided at different rates and on different cycles by separately controlling each magnetron. A schematic representation of the heating controls for the oven of FIGS. 1-5 is shown in FIG. 15.

In a preferred embodiment of the invention shown in FIGS. 16-20 (two cavity design), microwave energy from magnetrons 410 is fed into each oven cavity 18a through a pair of wave guides 400,402 (i.e., conduits) disposed above each cavity. Thus, each cavity 18a has its own independent microwave source. Each wave guide includes a plurality of openings 404, preferably slots, through which the microwaves travel into the cooking cavity. The slots 404 are spaced to provide substantially even microwave distribution along the length of the wave guide. Specifically, the slots are spaced approximately at multiples of the calculated minima or maxima for the microwaves generated by the microwave source, i.e. magnetron. The minima and maxima for a particular wave guide and magnetron are calculated by known means. Microwave maxima and minima for various wave guide designs and microwave frequencies also can be readily determined by reference to tables published by magnetron suppliers, such as Continental Microwave & Tool Co., Inc, Hampton, New Hampshire. As shown, slots 404 are preferably disposed at angles in relation to the length of wave guides which run generally from the back towards the front of each cavity. Further, as shown in FIGS. 17-18, blower assemblies 500 are preferably provided to cool the magnetrons 410 during operation.

An inherent advantage of using multiple magnetrons in each cavity of the oven rather than a single magnetron per cavity is the increased power two or more magnetrons will deliver into the cooking cavity verses a single magnetron of the same design. In addition, the dual magnetron arrangement disclosed herein also can be utilized to obtain improved microwave distribution within the cavity as well. To achieve this, the controls are designed and the magnetrons are connected in different ways so that they can be energized simultaneously (in phase), cross-shifted, in sequence, at random and/or ever-changing combinations of the above.

In a preferred embodiment of the invention, the wave guide is designed to provide substantially even cooking of food products without the need for microwave stirrer means such as moving reflective surfaces. As shown in detail in FIGS. 22-24, the wave guide (400,402) includes opposing walls 401 and 403 and opposing sides 405 and 407. As shown, a preferred embodiment of the wave guide (400, 402) includes a launcher section 406 and a delivery section 420 where microwave delivery slots 404 are disposed. The launcher section 406 is the portion of the wave guide where the wave is generated and where the circuit is properly tuned to match the cooking cavity load to the wave guide. The launching section 406 includes an orifice 408 through which the antenna of the magnetron is disposed within the launcher section and includes a tuning stub orifice 412 and tuning slot 414 that extends from the orifice 412 toward the distal end 416 of the wave guide (i.e., downstream from the magnetron). Preferably, the tuning stub orifice 412 and slot 414 are located along the centerline of one of the walls 401 or 403 in the microwave launcher section of the wave guide. A mounting pad 422 for mounting the magnetron to the wave guide is also provided in the preferred embodiment shown: In the optimization of the wave guide output, a metallic tuning element (stub) is first positioned within orifice 412 and moved along slot 414 until the guide is optimally tuned with the aid of a network analyzer. Preferably, the final position of the tuning stub is inside the range of one half of the guide wavelength downstream from the magnetron antenna. The slot 414 should cover that range so that the tuning stub can be adjusted and locked in place at the, optimum location. In production units, the tuner is preferably built in the wave guide according to size and location predetermined by the above method. In some instances it may be necessary to provide two stub orifices 412, one at each end of the slot 414 to allow the stub to be inserted from either end for tuning purposes.

Referring to FIG. 22, the magnetron antenna orifice 408 is preferably dimensioned to provide sufficient annular clearance around the magnetron antenna and the guide while providing full contact with the magnetron's metallic mesh gasket. This can be achieved by rolling or extruding the orifice, with the raised edge of the orifice facing outward from the wave guide to meet the magnetron's gasket surface. The preferred location of the orifice 408 with respect to the back wall of the wave guide to obtain maximum output is typically provided by the magnetron manufacturer. In the embodiment shown in FIG. 22, this distance is about 18.6 mm (+/- 1mm) [0,73" (+/-0,4")]. Still referring to FIGS. 22-24, the width "w" of the wave guide transmitting power at 2.45 GHz preferably ranges from about " 7,11 cm to 10,92 cm [2,8" to 4,3"] with the height "h" of the wave guide being about 35% to 50% of the width. In the preferred wave guide shown in FIGS 22-23, the wave guide has a width "w" of about 7,94 cm [3,125 inches] and a height "h" of about 2,54 cm [1 inch] (interior dimensions) along the microwave delivery section 420 of the wave guide. Wave guides are preferably constructed of sheet metal. Common steels used in oven construction such as cold rolled steel, aluminized and galvanized steel; and stainless steel, are suitable wave guide materials. If multiple pieces of sheet metal are used to construct the wave guide fasteners or welding is suitable. Preferably, spot welds or fasteners are spaced in short increments to avoid leakage. It is generally suitable to place the welds or fasteners between 1,27 cm and 1,91 cm [½" and ¾"] apart. In configurations where the wall of the cooking cavity also serves as a wall of the wave guide, it is preferable that the same fastening or welding method is used. The construction of the launcher section of the wave guide is similar to that of the microwave deliver section of the wave guide. Preferably, the laucher section is an integral part of the wave guide and is constructed from the same materials as the microwave delivery section of the wave guide. As shown in the preferred embodiment of FIG. 22, the width of the laucher section is the same as the width of the microwave delivery section of the wave guide. Preferably, the height of the launcher section adjacent the microwave antenna orifice is at least about 3.81 cm [1,5"] or as required for magnetron antenna clearance of at least about 0.95 cm [8/8"] from the opposite wall. As shown in FIG. 22, the height of the launcher section of the wave guide adjacent the microwave antenna orifice is 3,81 cm [1,5 inches] in the preferred embodiment with a transition slope 422 to the microwave delivery section 420 to minimize reflection.

Referring to FIG. 23 there is shown a preferred microwave delivery section 420 of the wave guide with slots 404 and theoretical wave "W." The main factor governing the number of slots 404 is the distance between them. The distance depends on the desired phasing operation of the wave guide. For "in phase" arrangement, the distance is one full guide wavelength. For a "180 degree shift" arrangement, the distance is one half of the guide wavelength and for a "90 degree shift" the distance is one quarter of the guide wavelength. Accordingly, the number of slots 404 depends on the arrangement versus the total available wave guide length.

In the preferred wave guide arrangement shown in FIGS. 23 and 24, slots 404 are spaced to provide substantially even microwave distribution along the length of the wave guide. As described above, the slots are preferably spaced at approximate multiples of the calculated minima or maxima for the microwaves generated by the microwave source, i.e. magnetron. Further, as shown in FIG 23, the slots 404 in the preferred embodiment are about 5,4 cm [2,125 inches] in length "L" and about 0,71 cm [0,278 inches] in width, with the ends of the slot being rounded. Further, the slots are positioned at an angle with the centerline C1 of the wave guide, with the centerline C2 of the slot 404 making a 60 degree angle with the centerline C1 of the wave guide. While a 60 degree angle is depicted in FIG. 24, this angle preferably ranges between about 60 - 70 degrees. Referring to FIG. 23, a preferred slot arrangement is shown with the number (or density) of slots increasing toward the distal end 416 of the wave guide (i.e. downstream of the microwave source). It has been found that by increasing the slot density in this manner a more uniform distribution of power into the cooking cavity is achieved. In an alternative embodiment having a similar effect, the width of the slots can be gradually increased, with slots furthest from the microwave source having greater width than slots closer to the microwave source, the effect being to increase the total slot area toward the distal end 416 of the wave guide. If the width of the slots is to be gradually increased, the length of the slot should decrease so that perimeter of the slot approximately equals the free space wavelength (frequency 2.45 GHz in the embodiment disclosed) in order for the slot to be resonant.

In a preferred embodiment of the invention it has been found that microwave distribution uniformity can be improved by placing a reflective surface on the interior side of the cooking cavity door. Specifically, in a preferred oven arrangement with a cooking cavity having approximate dimensions of 34,47 cm [14,75 inches] width, 22,56 cm [8,88 inches] height and 52,07 cm [20,50 inches] depth, it has been found that sloping the interior surface of the door improves microwave distribution within the cavity. Referring to FIG. 25, there is shown a cross section of a door 14 having a sloped interior surface 15 which provides a reflective surface for improved microwave distribution within the cavity. In the preferred embodiment, the interior surface of the door inclines from top to bottom toward the interior of the cooking cavity by about 2.54 cm [one inch].

In yet another preferred embodiment of the invention (FIG. 21) reciprocating reflective stirrers 600 are disposed above the heating elements at the top of heating chamber 18 for reflecting heat from the heating element toward the shelf below. Preferably, the stirrers are made of a material that is also microwave reflective so that enhanced stirring of microwaves is achieved, thereby promoting evenness of cooking. A suitable stirrer material is stainless steel. As shown, the reflective stirrer 600 is operably connected to bearing 602 which is moved by link 604, which in turn is connected to a drive link 606 driven by motor 608.

In the embodiment of the invention shown in FIGS. 16-20, it should be noted that chamber 18 comprises two cooking cavities 18a and that two doors 700 are used to seal the oven. Another feature of an embodiment of the invention provides for the exhausting of a portion of the temperature controlled cooking air from the blower housing. Referring to FIGS. 17-19, there is shown a exhaust opening 702 in blower housing 64 through which a portion of the temperature controlled gas is exhausted from the oven via stack (or conduit) 704. The exhausting of air from the system induces ambient air to be drawn through intake opening 706 disposed at the back of the oven. Ambient air is then drawn into partition chamber 708 disposed between the upper and lower cavities 18a. Air from partition chamber 708 is then drawn through openings 710 to both the upper and lower blower assemblies 60 which are in fluid communication with the partition chamber. Exhaust air flow and "make up" ambient air flow into the system is depicted by the arrows in FIGS. 19 and 20. The location of the partition chamber between the cooking cavities of the oven is particularly advantageous since the heat from the cooking cavities heats the air in the partition chamber, thus acting as a heat exchanger to preheat ambient air.

FIGS. 1 and 16 generally depict the control panel (or controller) 450 for the embodiments described herein. Preferably, the controller 450 has the capability to control microwave heating power and cook cycle times, and is capable of being programmed for particular food cooking applications. Likewise, it also is preferable that the controller 450 control the convective heat transfer aspects of the invention (e.g., blowers 60 and heating elements) and the reflective stirrers described above.

The present invention is not limited to the examples illustrated above, as it is understood that one ordinarily skilled in the art would be able to utilize substitutes and equivalents without departing from the present invention.

## Claims

1. An oven (10) comprising:
a cooking cavity (18, 18a) defined by a door (14) and a plurality of walls (19, 21, 23, 27); said cooking cavity (18, 18a) having a length, width and height;
a first microwave source (410) for producing microwaves;
a first wave guide (400) having a length which traverses said length or said width of said cooking cavity (18, 18a); said first wave guide (400) providing a conduit through which said microwaves travel; said first wave guide (400) having a plurality of slots (404) along the centerline of its length through which said microwaves can pass into said cooking cavity (18, 18a);
**characterised in that**
said slots (404) of said first wave guide (400) are arranged such that the number of slots (404) increases along said length of said first wave guide (400) downstream of said microwave source (410).

2. The oven (10) of Claim 1 further comprising:
a second microwave source (410) and a second wave guide (402) through which microwaves travel, said second wave guide (402) having a length which traverses said length or said width of said cooking cavity (18, 18a); said second wave guide (402) providing a conduit through which microwaves from said second microwave source (410) travel; said second wave guide (402) having a plurality of slots (404) along its length through which said microwaves can pass into said cooking cavity (18, 18a), said slots (404) of said second wave guide (402) being arranged such that the number of slots (404) increases along said length of said second wave guide (402) downstream of said microwave source.

3. The oven (10) of Claim 1 further comprising a blower (60) that circulates heated air into said cooking cavity (18, 18a).

4. The oven (10) of Claim 1 said slots (404) of said first wave guide (400) being disposed at an angle between 60-70 degrees to said centerline of said first wave guide (400).

5. The oven (10) of Claim 2 said slots (400) of said second wave guide (402) being disposed at an angle between 60-70 degrees to said centerline of said second wave guide (402).

6. The oven (10) of Claim 1 said door (14) having an interior surface (15) disposed within said cooking cavity (18, 18a) when said door (14) is in a closed position, said interior surface (15) being constructed of a microwave reflective material and being inclined.

## Patentansprüche

1. Ofen (10) mit:
einem Garraum (18, 18a), der von einer Tür (14) und einer Mehrzahl von Wänden (19, 21, 23, 27) definiert wird, wobei der Garraum (18, 18a) eine Länge, eine Breite und eine Höhe hat;
einer ersten Mikrowellenquelle (410) zum Erzeugen von Mikrowellen;
einem ersten Wellenleiter (400), der eine Länge hat, die die Länge oder die Breite des Garraums (18, 18a) durchläuft; wobei der erste Wellenleiter (400) einen Leiter bildet, durch den sich Mikrowellen fortpflanzen; wobei der erste Wellenleiter (400) eine Mehrzahl von Schlitzen (404) entlang der Mittellinie seiner Länge hat, durch die hindurch die Mikrowellen in den Garraum (18, 18a) eintreten können;
**dadurch gekennzeichnet, dass**
die Schlitze (404) des ersten Wellenleiters (400) so gebildet sind, dass die Anzahl von Schlitzen (404) entlang der Länge des ersten Wellenleiters (400) von der Mikrowellenquelle (410) ausgehend zunimmt.

2. Ofen (10) nach Anspruch 1, der weiter aufweist:
eine zweite Mikrowellenquelle (410) und einen zweiten Wellenleiter (402), durch den sich Mikrowellen fortpflanzen, wobei der zweite Wellenleiter (402) eine Länge hat, die die Länge oder die Breite des Garraums (18, 18a) durchläuft; wobei der zweite Wellenleiter (402) einen Leiter bildet, durch den sich Mikrowellen von der zweiten Mikrowellenquelle (410) fortpflanzen; wobei der zweite Wellenleiter (402) eine Mehrzahl von Schlitzen (404) entlang seiner Länge hat, durch die hindurch die Mikrowellen in den Garraum (18, 18a) eintreten können, wobei die Schlitze (404) des zweiten Wellenleiters (402) so ausgebildet sind, dass die Anzahl von Schlitzen (404) entlang der Länge des zweiten Wellenleiters (402) ausgehend von der zweiten Mikrowellenquelle ausgehend zunimmt.

3. Ofen (10) nach Anspruch 1, der weiter mit einem Gebläse (60) versehen ist, das erwärmte Luft in dem Garraum (18, 18a) umwälzt.

4. Ofen (10) nach Anspruch 1, wobei die Schlitze (404) des ersten Wellenleiters (400) in einem Winkel zwischen 60° bis 70° zu der Mittellinie des ersten Wellenleiters (400) angeordnet sind.

5. Ofen (10) nach Anspruch 2, wobei die Schlitze (400) des zweiten Wellenleiters (402) und einem Winkel zwischen 60° und 70° zu der Mittellinie des zweiten Wellenleiters (402) angeordnet sind.

6. Ofen (10) nach Anspruch 1, wobei die Tür (14) eine innere Oberfläche (15) hat, die in dem Garraum (18, 18a) liegt, wenn sich die Tür (14) in geschlossener Stellung befindet, wobei die innere Oberfläche (15) aus einem mikrowellenreflektierenden Material aufgebaut ist und geneigt ist.

## Revendications

1. Four (10) comprenant :
une cavité de cuisson (18, 18a) définie par une porte (14) et une pluralité de parois (19, 21, 23, 27) ; ladite cavité de cuisson (18, 18a) présentant une longueur, une largeur et une hauteur ;
une première source de micro-ondes (410) pour produire des micro-ondes ;
un premier guide d'ondes (400) présentant une longueur qui traverse ladite longueur ou ladite largeur de ladite cavité de cuisson (18, 18a) ; ledit premier guide d'ondes (400) fournissant un conduit à travers lequel circulent lesdites micro-ondes ; ledit premier guide d'ondes (400) possédant une pluralité de fentes (404) le long de la ligne centrale de sa longueur à travers lesquelles lesdites micro-ondes peuvent passer dans ladite cavité de cuisson (18, 18a) ;
**caractérisé en ce que** :
lesdites fentes (404) dudit premier guide d'ondes (400) sont agencées de telle sorte que le nombre de fentes (404) augmente le long de ladite longueur dudit premier guide d'ondes (400) en aval de ladite source de micro-ondes (410).

2. Four (10) selon la revendication 1 comprenant de plus :
une seconde source de micro-ondes (410) et un second guide d'ondes (402) à travers lequel circulent les micro-ondes, ledit second guide d'ondes (402) présentant une longueur qui traverse ladite longueur ou ladite largeur de ladite cavité de cuisson (18, 18a) ; ledit second guide d'ondes (402) fournissant un conduit à travers lequel circulent les micro-ondes qui proviennent de ladite seconde source de micro-ondes (410); ledit second guide d'ondes (402) possédant une pluralité de fentes (404) le long de sa longueur à travers lesquelles lesdites micro-ondes peuvent passer dans ladite cavité de cuisson (18, 18a), lesdites fentes (404) dudit second guide d'ondes (402) étant agencées de telle sorte que le nombre de fentes (404) augmente le long de ladite longueur dudit second guide d'ondes (402) en aval de ladite source de micro-ondes.

3. Four (10) selon la revendication 1, comprenant de plus un ventilateur (60) qui fait circuler l'air chauffé dans ladite cavité de cuisson (18, 18a).

4. Four (10) selon la revendication 1, lesdites fentes (404) dudit premier guide d'ondes (400) étant disposées sous un angle compris entre 60 et 70 degrés par rapport à ladite ligne centrale dudit premier guide d'ondes (400).

5. Four (10) selon la revendication 2, lesdites fentes (400) dudit second guide d'ondes (402) étant disposées sous un angle compris entre 60 et 70 degrés par rapport à ladite ligne centrale dudit second guide d'ondes (402).

6. Four (10) selon la revendication 1, ladite porte (14) présentant une surface intérieure (15) disposée à l'intérieur de ladite cavité de cuisson (18, 18a) lorsque ladite porte (14) se trouve dans une position fermée, ladite surface intérieure (15) étant construite dans un matériau qui réfléchit les micro-ondes, et étant inclinée.
